# EUROPÄISCHE PATENTSCHRIFT

(11) **EP 2 594 856 B1**
(45) Veröffentlichungstag und Bekanntmachung des Hinweises auf die Patenterteilung: **04.01.2017**
(21) Anmeldenummer: 12007405.9
(22) Anmeldetag: 30.10.2012
(51) Int. Cl.: F24D 17/00, C02F 1/02

(54) **Verfahren und Anordnung zur diskontinuierlichen Bereitstellung von temperiertem Wasser zur Verwendung in einem Prozess zur Herstellung und/oder Behandlung eines Nahrungsmittels**
Method and assembly for discontinuous provision of heated water for use in a process for producing and/or treating a food item
Procédé et agencement destinés à préparer de manière discontinue de l'eau tempérée pour être utilisée dans un processus de fabrication et/ou de traitement d'un aliment

(30) Priorität: 16.11.2011 DE 102011118660
(43) Veröffentlichungstag der Anmeldung: 22.05.2013
(73) Patentinhaber: GEA TDS GmbH, 31157 Sarstedt (DE)
(72) Erfinder: Löw, Joachim, 31141 Hildesheim (DE)
(74) Vertreter: Hauck Patentanwaltspartnerschaft mbB

(56) Entgegenhaltungen:
- WO-A1-89/03807
- WO-A1-90/02707
- DE-A1- 3 813 288
- DE-A1-102006 033 834
- DE-C1- 4 222 550
- DE-U1- 20 217 305

## Beschreibung

### TECHNISCHES GEBIET

Die Erfindung betrifft ein Verfahren zur diskontinuierlichen Bereitstellung von temperiertem Wasser zur Verwendung in einem Prozess zur Herstellung und/oder Behandlung eines Nahrungsmittels, insbesondere von Wasser zum Waschen von Käsebruch, bei dem Frischwasser mittels wenigstens eines ersten Wärmeträgermediums auf eine gewünschte Heißwassertemperatur aufgeheizt und als Heißwasser auf dieser Heißwassertemperatur bis zur Abgabe bereitgehalten wird und bei dem das Heißwasser und weiteres Frischwasser zu dem temperierten Wasser mit einer gewünschten Mischtemperatur gemischt werden, sowie eine Anordnung zur Durchführung des Verfahrens.

### STAND DER TECHNIK

In Prozessanlagen zur Herstellung und/oder Behandlung von Nahrungsmitteln- und Getränken ist oftmals die Verwendung von temperiertem Wasser erforderlich. Als Beispiel sei hier im Zuge der Herstellung von Käse das Waschen von Käsebruch mit einer definierten Menge temperiertem Wasser angeführt. Das temperierte Waschwasser kommt dabei mit dem Käsebruch zwangsläufig in Kontakt bzw. wird diesem zugegeben. Es hat dabei vorzugsweise eine Temperatur von ca. 30 bis 60 Grad Celsius, bevorzugt 40 Grad Celsius.

Es ist hinlänglich bekannt, dass Wasser in einem Temperaturbereich von 20 bis 50 Grad Celsius bakteriologisch kritisch ist, da ein diesbezüglich erwärmtes Wasser potenziell humanpathogenen Bakterien, beispielsweise in Form von Legionellen, optimale Bedingungen für die Vermehrung bietet. Legionellen werden hingegen bei einer Temperatur von mehr als 70 Grad Celsius in kurzer Zeit abgetötet.

Es muss daher vermieden werden, in einer Prozessanlage oder einem System, welches auf bakteriologisch kritischem Temperaturniveau diskontinuierlich temperiertes Wasser zur Verwendung bei der Herstellung und/oder Behandlung eines Nahrungsmittels bereitstellt, dieses temperierte Wasser bis zu seiner Verwendung zu lagern. In der Praxis ist es daher bislang üblich, das temperierte Wasser bei der gewünschten Verwendungstemperatur erst im Bedarfsfall durch eine Mischung aus kaltem Wasser (Frischwasser, beispielsweise von 15 Grad Celsius oder weniger) und heißem Wasser (oberhalb von 70 Grad Celsius, vorzugsweise von größer 72 Grad Celsius) herzustellen. Da weder die Verwendung von kaltem noch von heißem Wasser bakteriologisch kritisch ist, kann auf diese Weise das Risiko einer ungewollten bakteriologischen Verkeimung minimiert werden.

Das kalte Wasser, im Folgenden als Frischwasser bezeichnet, wird dabei in der Regel aus dem Frischwasser-Netz mit der dort vorliegenden Frischwassertemperatur zugeführt. Das heiße Wasser, im Folgenden als Heißwasser bezeichnet, wird einem Heißwassertank entnommen. In einer über den Heißwassertank und einen Wärmeaustauscher geführten Umlaufleitung, in der eine Umwälzpumpe angeordnet ist, wird das Wasser im Heißwassertank rekuperativ gegen Dampf oder Heißwasser bis auf eine gewünschte Heißwassertemperatur aufgeheizt und auf dieser gehalten.

Um Wärmeenergie einzusparen und die Wirtschaftlichkeit des Prozesses zu verbessern, kann das dem Heißwassertank zulaufende Wasser oder Frischwasser zusätzlich noch rekuperativ gegen ein in der Prozessanlage anfallendes Wärmeträgermedium vorgewärmt werden. Eine diesbezügliche Erwärmung ist bakteriologisch unkritisch, da das vorgewärmte Wasser unmittelbar anschließend auf die Heißwassertemperatur aufgeheizt wird. In Käsereien erfolgt die Vorwärmung des Wassers bzw. Frischwassers beispielsweise mittels Warmwasser aus einer Wärmerückgewinnung oder Wärmeschaukel oder mittels Warmbrüden.

Eine Vorwärmung des der Mischung mit dem Heißwasser zuzuführenden Frischwassers mit einem in der Prozessanlage anfallenden Wärmeträgermedium ist zwar prinzipiell möglich und aus Gründen möglichst hoher anzustrebender Energieeffizienz und Wirtschaftlichkeit auch wünschenswert, kann das vorgewärmte Wasser und die mit diesem beaufschlagten Bereiche der Prozessanlage aber mit Blick auf die vorstehenden Darlegungen in einen bakteriologisch kritischen Bereich bringen. Es wird daher bislang in aller Regel darauf verzichtet, das diesbezügliche Frischwasser, den kalten Anteil des temperierten Wassers, über eine Wärmerückgewinnung zu fahren.

In der DE 10 2006 033 834 A1 ist eine Anlage zum Erwärmen von Trinkwasser und zum Abtöten von Legionellen und sonstigen Keimen in diesem Trinkwasser beschrieben, die unter anderem aus einer Kaltwasserleitung zu einem Desinfektionswasser-Kreislauf mit einer Ladepumpe, einem Wassererwärmer und einem in einem eigenständigen Behälter vorgehaltenen Reaktionsvolumen, in dem das Trinkwasser einer Desinfektionstemperatur oberhalb von 60 °C unterzogen wird, sowie aus einem Zirkulationswasser-Kreislauf mit einer Zirkulationspumpe, einer Trinkwarmwasser-Verteilungsleitung zu den Entnahmestellen und einer Trinkwarmwasser-Sammelleitung besteht. Trinkwasser mit der gewünschten Trinkwarmwassertemperatur von z.B. 50 °C, das den Entnahmestellen zugeführt wird, wird in einem eigenständigen Trinkwarmwasserspeicher bevorratet.

In der bekannten Anlage wird in der Nacht, d.h. im Regelfall bei Zapfruhe, in einstellbaren Zeiträumen (z.B. täglich, wöchentlich) der gesamte Zirkulationswasser-Kreislauf unter Vermeidung eines Aufheizens des Trinkwarmwasserspeichers über die gewünschte Trinkwarmwassertemperatur hinaus der Desinfektionstemperatur oberhalb von 60 °C unterzogen. Der Trinkwarmwasserspeicher, der stets zumindest in seinem oberen Bereich mit Trinkwarmwasser von in der Regel 50 °C gefüllt ist, bleibt grundsätzlich unter allen Betriebsbedingungen (Zapfruhe oder Zapfung) von der Beaufschlagung mit der Desinfektionstemperatur von oberhalb 60 °C ausgeschlossen. Eine hinreichende Desinfektion des Trinkwassers bei Zapfung wird erreicht, wenn der Volumenstrom im Desinfektionswasser-Kreislauf, der stets kleiner ist als ein der Spitzenentnahme an Trinkwarmwasser entsprechender Volumenstrom, im Verhältnis zum Reaktionsvolumen so bemessen ist, dass die Verweilzeit dort der notwendigen Desinfektionszeit entspricht.

Ausgehend von dem vorgenannten Stand der Technik ist es die Aufgabe der vorliegenden Erfindung, ein Verfahren und eine Anordnung zur diskontinuierlichen Bereitstellung von temperiertem Wasser zur Verwendung in einem Prozess zur Herstellung und/oder Behandlung eines Nahrungsmittels der gattungsgemäßen Art anzugeben, mit dem eine gegenüber dem Stand der Technik verbesserte Energieeffizienz und Wirtschaftlichkeit gegeben ist, ohne dass dadurch bakteriologische Risiken auftreten.

### ZUSAMMENFASSUNG DER ERFINDUNG

Die der Erfindung zugrundeliegende Aufgabe wird mit einem Verfahren mit den Merkmalen des Anspruchs 1 gelöst. Vorteilhafte Ausgestaltungen des Verfahrens sind Gegenstand der Unteransprüche. Eine Anordnung zur Durchführung des Verfahrens ist Gegenstand des unabhängigen Anspruchs 5.

Die vorliegende Erfindung basiert auf zwei Lösungsgedanken, die sich in zwei Verfahrensschritten manifestieren. Der erste Lösungsgedanke bzw. erste Verfahrensschritt sieht vor, dass wenigstens das der Mischung mit dem Heißwasser zuzuführende Frischwasser, der kalte Anteil des zu temperierenden Wassers, rekuperativ mittels eines zweiten Wärmeträgermediums auf vorgewärmtes Wasser vorgewärmt wird.

Der zweite Lösungsgedanke bzw. zweite Verfahrensschritt sieht vor, dass in den Zeitabschnitten, in denen kein temperiertes Wasser gemischt oder Frischwasser zu Heißwasser aufgeheizt wird, wenigstens die bis zur Mischstelle für das Heißwasser und das vorgewärmte Wasser mit dem vorgewärmten Wasser beaufschlagten Bereiche mittels des bereitgehaltenen Heißwassers im Durchfluss beaufschlagt werden. Da das Heißwasser planmäßig oberhalb von 72 Grad Celsius bevorratet und bereitgehalten wird, ergeben sich günstigste Bedingungen für eine thermische Desinfektion dieser ggf. mit Legionellen oder mit anderen potenziell pathogenen oder nicht gewünschten Bakterien verkeimten Bereiche und der dort ggf. verbliebenen Restwassermengen. Darüber hinaus werden die in Frage kommenden kritischen Bereiche durch diese Heißwasserbeaufschlagung im Durchfluss hinreichend nachhaltig entkeimt.

Eine weiter verbesserte Energieeffizienz und Wirtschaftlichkeit werden erreicht, wie dies ein weiterer Vorschlag vorsieht, wenn auch das zur Bereitung des Heißwassers zuzuführende Frischwasser, der heiße Anteil des zu temperierenden Wassers, entsprechend vorgewärmt wird.

Ein anderer Vorschlag sieht vor, dass alle mit dem vorgewärmten Wasser beaufschlagten Bereiche mittels des bereitgehaltenen Heißwassers im Durchfluss beaufschlagt werden. Die erfindungsgemäße Anordnung zur Durchführung des Verfahrens erlaubt es durch ihre konzeptionelle Ausgestaltung, dass auch jene Bereiche, die zwar mit dem vorgewärmten Wasser in Berührung kommen, aber nicht bakteriologisch kritisch sind, weil das Wasser von dort letztlich bis zur Heißwassertemperatur aufgeheizt wird, mit in die thermische Desinfektion und Entkeimung einbezogen werden.

Das erfindungsgemäße Verfahren erlaubt grundsätzlich die Vorwärmung des kalten Anteils des temperierten Wassers ohne die damit verbundenen bakteriologischen Risiken. Dieser Sachverhalt ist unabhängig davon, ob das zweite Wärmeträgermedium aus einem Wärmerückgewinnungsprozess entstammt oder nicht, wobei die gegenüber dem bekanntgewordenen Stand der Technik höhere Energieeffizienz und Wirtschaftlichkeit dann erreicht werden, wenn wenigstens das zweite Wärmeträgermedium, wie dies ein weiterer Vorschlag vorsieht, einem Wärmerückgewinnungsprozess entstammt.

Aber selbst wenn darauf verzichtet würde, das der Mischung mit dem Heißwasser zuzuführende Frischwasser rekuperativ mittels eines zweiten Wärmeträgermediums vorzuwärmen, ergeben sich durch die verbleibende Anwendung des zweiten Lösungsgedankens Vorteile hinsichtlich einer Absenkung des Risikos einer Verkeimung in jenen Bereichen, die vom kalten Anteil des temperierten Wassers bis zur Mischstelle beaufschlagt werden. Es ist nämlich grundsätzlich nicht auszuschließen, dass sich in Stillstandszeiten, wenn kein temperiertes Wasser benötigt wird, das bis zur Mischstelle anstehende Frischwasser bis auf Temperaturen erwärmt, in denen das in Rede stehende bakterielle Wachstum beginnt. Die Einbeziehung dieser Bereiche bis zur Mischstelle in den Heißwasserumlauf bewirkt eine vorbeugende thermische Desinfektion und Entkeimung. In dem zweiten erfinderischen Lösungsgedanken ist somit eine eigenständige Erfindung begründet.

Die erfindungsgemäße Anordnung zur Durchführung des Verfahrens nach der Erfindung geht aus von einer an sich bekannten Anordnung, und zwar mit einer über einen Heißwassertank und einen ersten Wärmeaustauscher geführten Umlaufleitung, in der zwischen Heißwassertank und erstem Wärmeaustauscher eine Umwälzpumpe angeordnet ist. Weiterhin mit einer in den Heißwassertank unmittelbar oder mittelbar einmündenden Zulaufleitung, mit einer aus dem Heißwassertank unmittelbar oder mittelbar ausmündenden Ablaufleitung, die sich in einem ersten Mehrwegeventil mit der Zulaufleitung fluidgängig kreuzt, und mit einer in der Ablaufleitung, oberstromig des ersten Mehrwegeventils, angeordneten Abförderpumpe. Um die zwei erfindungsgemäßen Verfahrensschritte durchführen zu können, erfährt die vorg. Anordnung die folgenden erfinderischen Änderungen und Ergänzungen:
- Die Zulaufleitung ist oberstromig des ersten Mehrwegeventils über einen zweiten Wärmeaustauscher geführt.
- Die Umlaufleitung kreuzt sich fluidgängig in einem zweiten Mehrwegeventil mit der Zulaufleitung und
- das zweite Mehrwegeventil ist, bezogen auf die Zulaufleitung, oberstromig des zweiten Wärmeaustauschers angeordnet.

### KURZBESCHREIBUNG DER ZEICHNUNGEN

Während die Erfindung in den verschiedensten Verfahrensvarianten realisiert ist, wird in den Figuren der Zeichnung am Beispiel einer dort dargestellten bevorzugten Anordnung eine gleichfalls bevorzugte Verfahrensvariante beschrieben. Diese dargestellte Anordnung und nachfolgend beschriebe Verfahrensvariante stellen nur ein Beispiel für die Erfindung dar, die Erfindung ist aber nicht auf dieses speziell dargestellte Beispiel beschränkt.

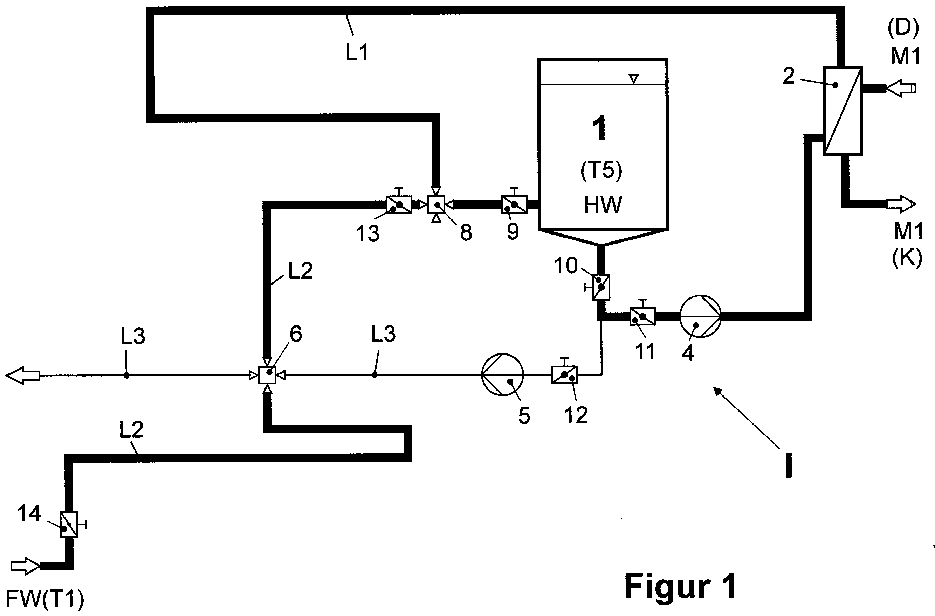

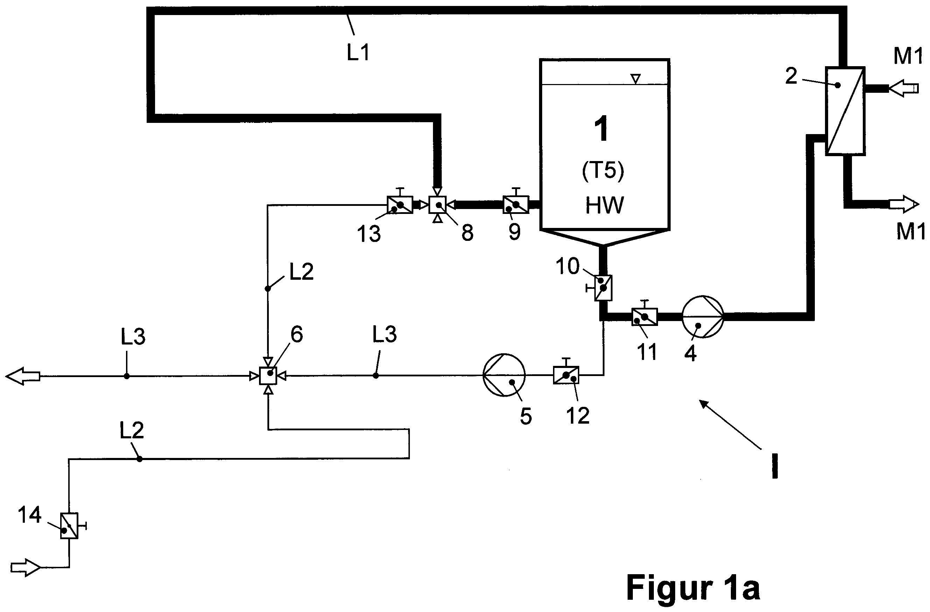

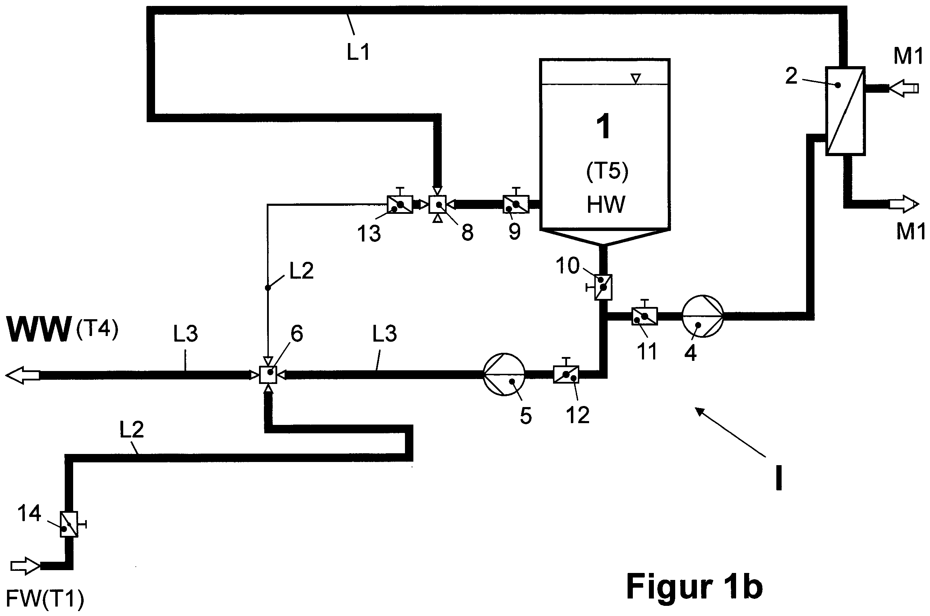

Der nächstkommende Stand der Technik, von dem die vorliegende Erfindung ausgeht, ist in den **Figuren 1****,** **1a** und **1b** aufgezeigt. Es zeigen
- **Figur 1**: in schematisierter und auf das Wesentliche reduzierter Darstellung eine bekannte Anordnung zur diskontinuierlichen Bereitstellung von temperiertem Wasser der gattungsgemäßen Art, wobei sich der Heißwassertank in der Phase seiner Befüllung mit Frischwasser und rekuperativen Aufheizung im Umlauf auf die gewünschte Heißwassertemperatur befindet;
- **Figur 1a**: die Anordnung gemäß **Figur 1****,** wobei die Befüllung des Heißwassertanks beendet ist und das Heißwasser im Umlauf gefahren und auf der gewünschten Heißwassertemperatur gehalten wird und
- **Figur 1b**: die Anordnung gemäß **Figur 1****,** wobei Heißwasser aus dem Heißwassertank entnommen und mit Frischwasser zu dem gewünschten temperierten Wasser gemischt und gleichzeitig das im Heißwassertank verbleibende Heißwasser im Umlauf gefahren und auf der gewünschten Heißwassertemperatur gehalten wird.

Die erfindungsgemäße Anordnung und wesentliche Phasen des mit dieser Anordnung durchführbaren Verfahrens sind in den weiteren Figuren der Zeichnung dargestellt. Es zeigen:

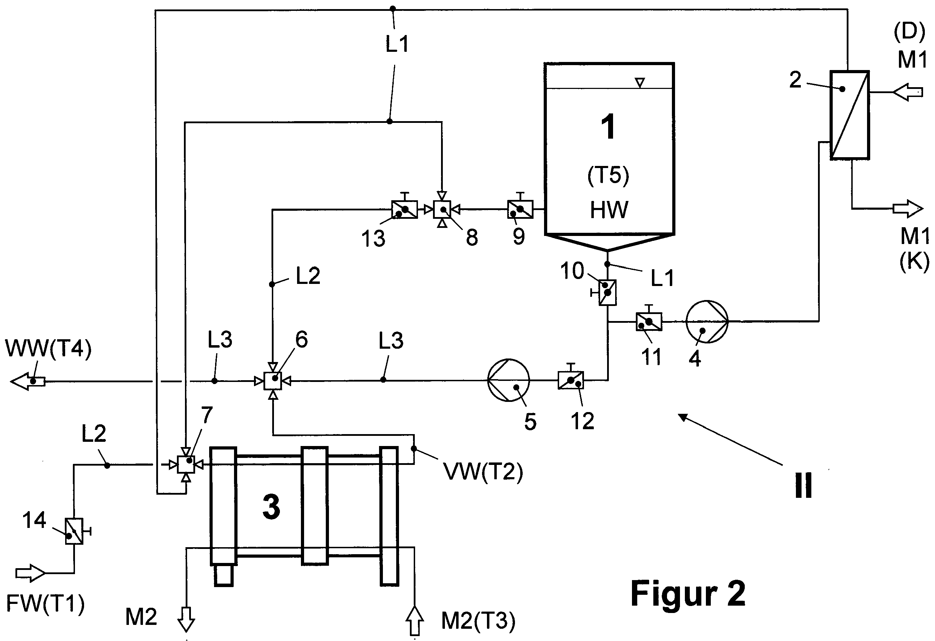

- **Figur 2**: in schematisierter und auf das Wesentliche reduzierter Darstellung eine erfindungsgemäße Anordnung zur diskontinuierlichen Bereitstellung von temperiertem Wasser der gattungsgemäßen Art mit allen zur weiteren Erläuterung der Anordnung und des erfindungsgemäßen Verfahrens notwendigen Bezeichnungen;

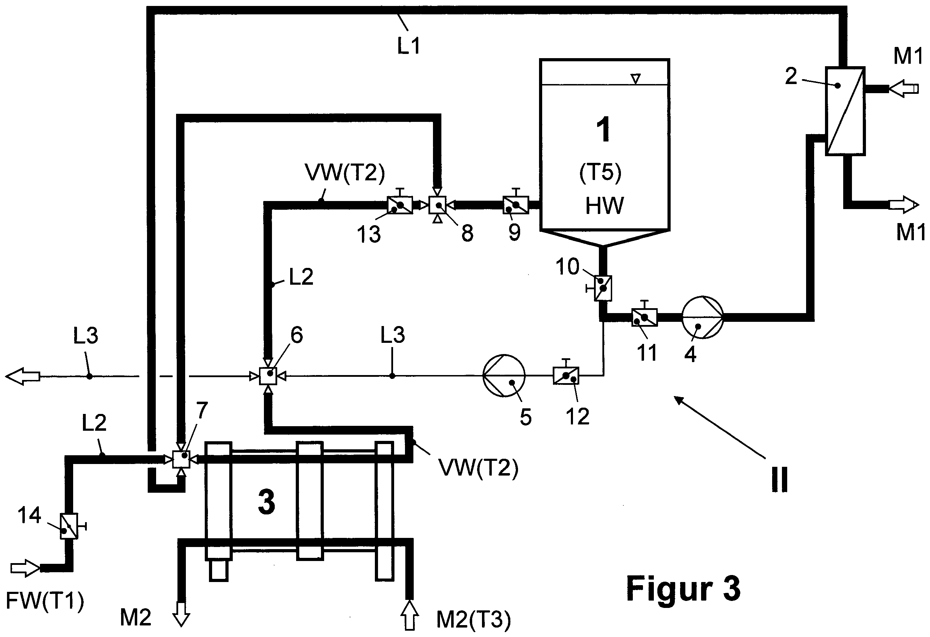

- **Figur 3**: die Anordnung gemäß **Figur 2****,** wobei sich der Heißwassertank in der Phase seiner Befüllung mit Frischwasser und rekuperativen Aufheizung im Umlauf auf die gewünschte Heißwassertemperatur befindet und das zuzuführende Frischwasser rekuperativ mittels eines zweiten Wärmeträgermediums vorgewärmt wird;

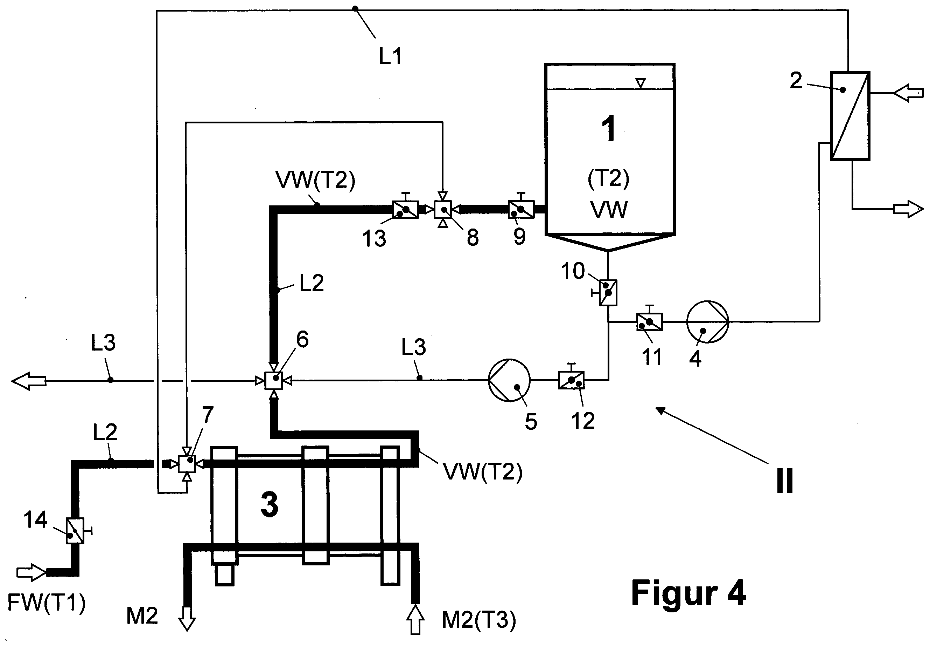

- **Figur 4**: die Anordnung gemäß **Figur 2****,** wobei sich der Heißwassertank in der Phase seiner Befüllung mit Frischwasser befindet und das zuzuführende Frischwasser rekuperativ mittels eines zweiten Wärmeträgermediums vorgewärmt wird;

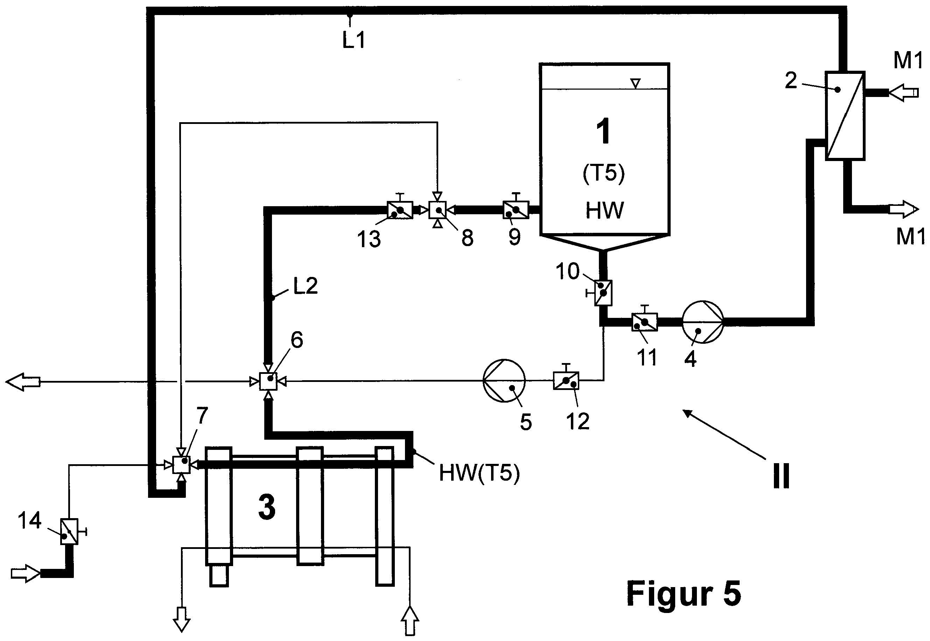

- **Figur 5**: die Anordnung gemäß **Figur 2****,** wobei alle mit dem vorgewärmten Wasser beaufschlagten Bereiche, resultierend aus der in **Figur 3** oder **Figur 4** dargestellten Phase, mittels des bereitgehaltenen Heißwassers im Durchfluss beaufschlagt werden und

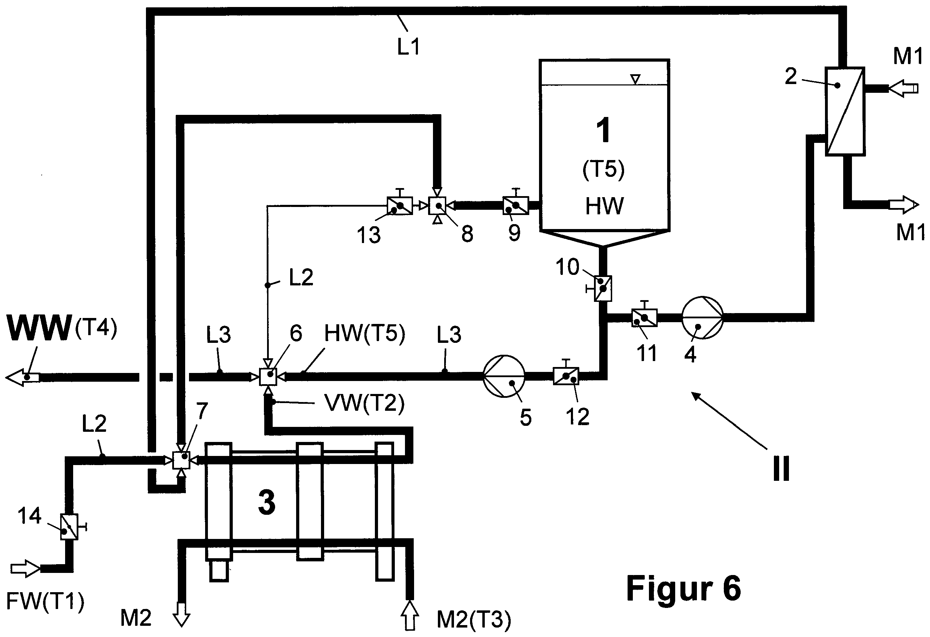

- **Figur 6**: die Anordnung gemäß **Figur 2****,** wobei Heißwasser aus dem Heißwassertank entnommen und mit vorgewärmtem Frischwasser zu dem gewünschten temperierten Wasser gemischt und gleichzeitig das im Heißwassertank verbleibende Heißwasser im Umlauf gefahren und auf der gewünschten Heißwassertemperatur gehalten wird.

### DETAILLIERTE BESCHREIBUNG

### Stand der Technik

Eine bekannte Anordnung I (**Figuren 1****,** **1a****,** **1b****)** zur diskontinuierlichen Bereitstellung von temperiertem Wasser WW **(****Figur 1b****)** zur Verwendung in einem Prozess zur Herstellung und/oder Behandlung eines Nahrungsmittels besteht, auf ihre wesentlichen Bestandteile reduziert, aus einer über einen Heißwassertank 1 für Heißwasser HW mit einer gewünschten Heißwassertemperatur T5 und einen ersten Wärmeaustauscher 2 geführten Umlaufleitung L1, in der zwischen dem Heißwassertank 1 und dem ersten Wärmeaustauscher 2 eine Umwälzpumpe 4 angeordnet ist. Eine mit Frischwasser FW mit einer Frischwassertemperatur T1 gespeiste, eintrittsseitig über ein sechstes Absperrventil 14 schaltbare Zulaufleitung L2 mündet über ein drittes Mehrwegeventil 8 oberstromig des Heißwassertanks 1 in die Umlauf L2 ein. In der Zulaufleitung L2 befindet sich oberstromig des dritten Mehrwegeventils 8 ein fünftes Absperrventil 13, und der in den Heißwassertank 1 unmittelbar eintretende Abschnitt der Umlaufleitung L1 ist über ein erstes Absperrventil 9 absperrbar. Von der aus dem Heißwassertank 1 ausmündenden Umlaufleitung L1 zweigt zwischen einem in dieser angeordneten zweiten Absperrventil 10 und einem ebenfalls in dieser angeordneten dritten Absperrventil 11 eine Ablaufleitung L3 ab, die sich in einem ersten Mehrwegeventil 6 mit der Zulaufleitung L2 fluidgängig kreuzt. In dem zum ersten Mehrwegeventil 6 führenden Abschnitt der Ablaufleitung L3 sind ein viertes Absperrventil 12 und unterstromig desselben eine Abförderpumpe 5 angeordnet. Der erste Wärmeaustauscher 2, an den sekundärseitig die Umlaufleitung L1 angeschlossen ist, wird primärseitig von einem ersten Wärmeträgermedium M1 beaufschlagt, bei dem es sich beispielsweise um Dampf D handeln kann, der kondensiert und als Kondensat K abgeführt wird. Als erstes Wärmeträgermedium M1 kann aber auch heißes Wasser mit einer hinreichenden Temperaturdifferenz gegenüber der gewünschten Heißwassertemperatur T5 im Heißwassertank 1 Verwendung finden.

Nach **Figur 1** befindet sich der Heißwassertank 1 in der Phase seiner Befüllung mit Frischwasser FW mit der Frischwassertemperatur T1 und rekuperativen Aufheizung im Umlauf auf die gewünschte Heißwassertemperatur T5, bewirkt durch den ersten Wärmeaustauscher 2 und betrieben durch die Umwälzpumpe 4. Die Absperrventile 9, 10 und 11 in der Umlaufleitung L1 und die Absperrventile 13 und 14 in der Zulaufleitung L2 sind geöffnet, das vierte Absperrventil 12 in der Ablaufleitung L3 ist geschlossen, die Abförderpumpe 5 ist ausgeschaltet. Das erste Mehrwegeventil 6 schaltet die Zulaufleitung L2 auf Durchgang und sperrt sie gegenüber der Ablaufleitung L3. Das dritte Mehrwegeventil 8 schaltet die Umlaufleitung L1 auf Durchgang, ist zur Zulaufleitung L2 hin geöffnet und sperrt einen weiteren Anschluss, dessen Verrohrung nicht dargestellt ist.

Nach der vollständigen Befüllung des Heißwassertanks 1 **(****Figur 1a****)** schließen die Absperrventile 14 und 13 und es wird dessen Inhalt im Umlauf über die Umlaufleitung L1 mittels des den ersten Wärmeaustauscher 2 beaufschlagenden ersten Wärmeträgermediums M1 bis auf die gewünschte Heißwassertemperatur T5 aufgeheizt und als Heißwasser HW auf dieser Heißwassertemperatur T5 bis zur Abgabe bereitgehalten.

Bei Anforderung von temperiertem Wasser WW mit einer Mischtemperatur T4 **(****Figur 1b****)** öffnen die Absperrventile 12 und 14, das erste Mehrwegeventil 6 schaltet die Ablaufleitung L3 auf Durchgang, wobei es gleichzeitig seinen mit dem Frischwasser FW gespeisten Anschluss zur Zulaufleitung L2 öffnet. Dadurch bildet das erste Mehrwegeventil 6 die Mischstelle für das aus dem Heißwassertank 1 mit der Heißwassertemperatur T5 über die Ablaufleitung L3 herangeführte Heißwasser HW mit dem mit der Frischwassertemperatur T1 über die Zulaufleitung L2 zuströmenden Frischwasser FW. Das Mengenverhältnis dieser beiden Wasserströme unterschiedlicher Temperaturen T5, T1 wird in einer an sich bekannten, nicht dargestellten Weise so geregelt, dass sich der erforderliche Mengenstrom temperierten Wassers WW, das Mischwasser, beispielsweise als Waschwasser zum Waschen von Käsebruch, mit der erforderlichen Mischtemperatur T4 in dem weiteren Abschnitt der Ablaufleitung L3, unterstromig des ersten Mehrwegeventils 6, einstellt und seiner Verwendung in einem Prozess zur Herstellung und/oder Behandlung eines Nahrungsmittels zugeführt werden kann.

### Erfindung

Das erfindungsgemäße Verfahren besteht aus zwei Schritten, nämlich einem ersten Schritt,
- bei dem wenigstens das der Mischung mit dem Heißwasser HW zuzuführende Frischwasser FW rekuperativ mittels eines zweiten Wärmeträgermediums M2 auf vorgewärmtes Wasser VW vorgewärmt wird,
und einem zweiten Schritt,
- bei dem in den Zeitabschnitten, in denen kein temperiertes Wasser WW gemischt oder Frischwasser FW zu Heißwasser HW aufgeheizt wird, wenigstens die bis zur Mischstelle für das Heißwasser HW und das vorgewärmte Wasser VW mit dem vorgewärmten Wasser VW beaufschlagten Bereiche mittels des bereitgehaltenen Heißwassers HW im Durchfluss beaufschlagt werden.

Zur Durchführung des erfindungsgemäßen Verfahrens ist die vorstehend anhand der **Figuren 1****,** **1a** und **1b** beschriebene bekannte Anordnung I derart zu ändern und zu ergänzen, dass sie die nachfolgenden erfindungsgemäßen Merkmale aufweist und dadurch zu einer erfindungsgemäßen Anordnung II wird **(****Figur 2****):**
- Die Zulaufleitung L2 ist oberstromig des ersten Mehrwegeventils 6 über die Sekundärseite eines zweiten Wärmeaustauschers 3 geführt.
- Die Umlaufleitung L1 kreuzt sich fluidgängig in einem zweiten Mehrwegeventil 7 mit der Zulaufleitung L2 und
- das zweite Mehrwegeventil 7 ist, bezogen auf die Zulaufleitung L2, oberstromig des zweiten Wärmeaustauschers 3 angeordnet.

Primärseitig ist der zweite Wärmeaustauscher 3, wenn er am Ausgang seiner Sekundärseite die Vorwärmung des Frischwassers FW zu dem vorgewärmten Wasser VW mit einer Vorwärmtemperatur T2 bewirken soll **(****Figur 2****),** mit einem zweiten Wärmeträgermedium M2, das vorzugsweise aus einer Wärmerückgewinnung mit einer Eintrittstemperatur T3 zugeführt wird, beaufschlagt.

Es wird nachfolgend nur noch auf die erfindungsgemäßen verfahrenstechnischen Unterschiede hingewiesen, die sich beim Betrieb der erfindungsgemäßen Anordnung II gegenüber der bekannten Anordnung I ergeben. Auf die Wiederholung bereits beschriebener Verfahrensmerkmale, bedingt durch identische Teile der Anordnungen I und II, wird verzichtet.

Nach **Figur 3** befindet sich der Heißwassertank 1 in der Phase seiner Befüllung mit dem vorgewärmtem Wasser VW, das den zweiten Wärmeaustauscher 3 mit der Vorwärmtemperatur T2 verlässt und über die Zulaufleitung L2 und das dritte Mehrwegeventil 8 in die Umlaufleitung L1 und von dort, vorzugsweise auf kurzem Weg, in den Heißwassertank 1 eintritt. Die rekuperative Aufheizung des vorgewärmten Wassers VW auf die gewünschte Heißwassertemperatur T5 erfolgt, wie bereits zu Anordnung I beschrieben, im Umlauf und zeitgleich zur vorstehend beschriebenen Befüllung, wobei sich die Umlaufleitung L1 mit der Zulaufleitung L2 in dem zweiten Mehrwegeventil 7 kreuzt, ohne dass dort eine fluidgängige Verbindung zwischen Umlauf- und Zulaufleitung L1, L2 besteht.

Nach **Figur 4** befindet sich der Heißwassertank 1 in der Phase seiner Befüllung mit dem vorgewärmtem Wasser VW, das den zweiten Wärmeaustauscher 3 mit der Vorwärmtemperatur T2 verlässt und über die Zulaufleitung L2 und das dritte Mehrwegeventil 8 in die Umlaufleitung L1 und von dort, vorzugsweise auf kurzem Weg, in den Heißwassertank 1 eintritt. Auf eine zeitgleich mit der Befüllung des Heißwassertanks 1 stattfindende Aufheizung desselben wird bei dieser Verfahrensvariante verzichtet, wobei die Aufheizung dann im Anschluss an die Befüllung stattfindet.

Die **Figuren 3** und **4** machen deutlich, dass durch die Vorwärmung des Frischwassers VW im ersten Schritt des erfindungsgemäßen Verfahrens die Energieeffizienz und die Wirtschaftlichkeit gegenüber dem bekannten Verfahren erhöht ist, dass aber dadurch die vom vorgewärmten Wasser VW beaufschlagten Bereiche der Zulaufleitung L2 auf den ersten Blick in einen bakteriologisch kritischen Temperaturbereich verbracht werden. Dabei ist die Zulaufleitung L2 im Bereich zwischen dem ersten und dem dritten Mehrwegeventil 6, 8 jedoch unkritisch, da das dort befindliche vorgewärmte Wasser VW zwangsläufig in den Heißwassertank 1 gelangt und durch die anschließende Aufheizung desinfiziert wird.

Anders verhält es sich mit jenen Bereichen der Zulaufleitung L2, die oberstromig des ersten Mehrwegeventils 6, der Mischstelle, mit vorgewärmtem Wasser VW beaufschlagt sind. Dies ist der bakteriologisch kritische Bereich der Zulaufleitung L2 zwischen dem zweiten und dem ersten Mehrwegeventil 7, 6. Hier setzt nun der zweite Schritt des erfindungsgemäßen Verfahrens an, der in **Figur 5** dargestellt ist.

In den Zeitabschnitten, in denen kein temperiertes Wasser WW gemischt oder Frischwasser FW zu Heißwasser HW aufgeheizt wird **(****Figur 5****),** werden wenigstens die bis zur Mischstelle für das Heißwasser HW und das vorgewärmte Wasser VW, dem ersten Mehrwegeventil 6, mit dem vorgewärmten Wasser VW beaufschlagten Bereiche der Zulaufleitung L2 mittels des im Heißwassertank 1 bereitgehaltenen Heißwassers HW im Durchfluss über jenen Teil der Umlaufleitung L1 beaufschlagt, der, in Strömungsrichtung gesehen, in das zweite Mehrwegeventil 7 einmündet, und damit thermisch desinfiziert und entkeimt. Letzteres ist so geschaltet, dass es nur eine Verbindung zwischen dem vorg. Abschnitt der Umlaufleitung L1 und dem in den zweiten Wärmeaustauscher 3 eintretenden Abschnitt der Zulaufleitung L2 herstellt. Das sechste Absperrventil 14 in der Zulaufleitung L2 ist darüber hinaus zusätzlich geschlossen.

Die in **Figur 5** dargestellte Strömungsführung des zum Zwecke der Desinfizierung und Entkeimung zirkulierenden Heißwassers HW erfasst nicht nur in notwendiger Weise den kritischen Bereich der Zulaufleitung L2 zwischen dem zweiten und dem ersten Mehrwegeventil 7, 6, sondern, wie dies eine vorteilhafte Ausgestaltung des Verfahrens vorsieht, auch jene Bereiche der Zulaufleitung L2 in Verbindung mit der Umlaufleitung L1, beginnend vom ersten Mehrwegeventil 6 und bis zum Eintritt in den Heißwassertank 1, die zwar mit dem vorgewärmten Wasser VW in Berührung kommen, aber nicht bakteriologisch kritisch sind, weil das Wasser von dort letztlich bis zur Heißwassertemperatur T5 immer aufgeheizt wird.

Bei Anforderung von temperiertem Wasser WW mit einer Mischtemperatur T4 **(****Figur 6****)** besteht der Unterschied zwischen der erfindungsgemäßen Anordnung II Zeilen und der bekannten Anordnung I darin, dass der Mischstelle, dem ersten Mehrwegeventil 6, nunmehr über die thermisch desinfizierte und entkeimte Zulaufleitung L2 vorgewärmtes Wasser VW mit der Vorwärmtemperatur T2 zuströmt. Auch in dieser Phase des erfindungsgemäßen Verfahrens sind dadurch die Energieeffizienz und die Wirtschaftlichkeit gegenüber dem bekannten Verfahren erhöht. Bakteriologische Risiken treten zum Einen wegen der vorstehend erwähnten thermischen Desinfizierung und Entkeimung nicht auf und zum Anderen ist in der kurzen Verweilzeit, in der das vorgewärmte Wasser VW in dem kritischen Bereich der Zulaufleitung L2 verbleibt, eine unerwünschte Bakterienbildung bzw. Verkeimung nicht möglich.

### BEZUGSZEICHENLISTE DER VERWENDETEN ABKÜRZUNGEN

- **I**: Anordnung nach dem Stand der Technik
- **II**: Anordnung nach der Erfindung

- 1: Heißwassertank

- 2: erster Wärmeaustauscher
- 3: zweiter Wärmeaustauscher

- 4: Umwälzpumpe
- 5: Abförderpumpe

- 6: erstes Mehrwegeventil
- 7: zweites Mehrwegeventil
- 8: drittes Mehrwegeventil

- 9: erstes Absperrventil
- 10: zweites Absperrventil
- 11: drittes Absperrventil
- 12: viertes Absperrventil
- 13: fünftes Absperrventil
- 14: sechstes Absperrventil

- D: Heißdampf; Sattdampf
- K: Kondensat

- L1: Umlaufleitung
- L2: Zulaufleitung
- L3: Ablaufleitung

- M1: erstes Wärmeträgermedium (z.B. Heißdampf; Sattdampf)
- M2: zweites Wärmeträgermedium (z.B. aus Energierückgewinnung)
- T1: Frischwassertemperatur (z.B. 13 °C)
- T2: Vorwärmtemperatur (z.B. 25 °C)
- T3: Eintrittstemperatur (des zweiten Wärmeträgermediums M2; z.B. 29 °C)
- T4: Mischtemperatur (z.B. 40 °C)
- T5: Heißwassertemperatur (> 70 °C; vorzugsweise ca. 75 °C)

- FW: Frischwasser
- HW: Heißwasser
- VW: vorgewärmtes Wasser
- WW: temperiertes Wasser (Mischwasser; Waschwasser)

## Patentansprüche

1. Verfahren zur diskontinuierlichen Bereitstellung von temperiertem Wasser (WW) zur Verwendung in einem Prozess zur Herstellung und/oder Behandlung eines Nahrungsmittels, bei dem Frischwasser (FW) rekuperativ mittels wenigstens eines ersten Wärmeträgermediums (M1) auf eine gewünschte Heißwassertemperatur (T5) aufgeheizt und als Heißwasser (HW) auf dieser Heißwassertemperatur (T5) bis zur Abgabe bereitgehalten wird und bei dem das Heißwasser (HW) und **dadurch gekennzeichnet, dass** weiteres Frischwasser (FW) zu dem temperierten Wasser (WW)
mit einer gewünschten Mischtemperatur (T4) gemischt werden und,
. dass wenigstens das der Mischung mit dem Heißwasser (HW) zuzuführende Frischwasser(FW) rekuperativ mittels eines zweiten Wärmeträgermediums (M2) auf vorgewärmtes Wasser (VW) vorgewärmt wird,
. und dass in den Zeitabschnitten, in denen kein temperiertes Wasser (WW) gemischt oder Frischwasser (FW) zu Heißwasser (HW) aufgeheizt wird, wenigstens die bis zur Mischstelle für das Heißwasser (HW) und das vorgewärmte Wasser (VW) mit dem vorgewärmten Wasser (VW) beaufschlagten Bereiche mittels des bereitgehaltenen Heißwassers (HW) im Durchfluss beaufschlagt werden.

2. Verfahren nach Anspruch 1,
**dadurch gekennzeichnet**
**dass** das zur Bereitung des Heißwassers (HW) zuzuführende Frischwasser (FW) rekuperativ mittels des zweiten Wärmeträgermediums (M2) auf vorgewärmtes Wasser (VW) vorgewärmt wird.

3. Verfahren nach Anspruch 1 oder 2,
**dadurch gekennzeichnet**
**dass** alle mit dem vorgewärmten Wasser (VW) beaufschlagten Bereiche mittels des bereitgehaltenen Heißwassers (HW) im Durchfluss beaufschlagt werden.

4. Verfahren nach einem der vorhergehenden Ansprüche,
**dadurch gekennzeichnet**
**dass** wenigstens das zweite Wärmeträgermedium (M2) einem Wärmerückgewinnungsprozess entstammt.

5. Anordnung zur Durchführung des Verfahrens nach einem der vorhergehenden Ansprüche,
. mit einer über einen Heißwassertank (1) und einen ersten Wärmeaustauscher (2) geführten Umlaufleitung (L1), in der zwischen Heißwassertank 1 und erstem Wärmeaustauscher 2 eine Umwälzpumpe (4) angeordnet ist,
. mit einer in den Heißwassertank (1) unmittelbar oder mittelbar einmündenden Zulaufleitung (L2),
. mit einer aus dem Heißwassertank (1) unmittelbar oder mittelbar ausmündenden Ablaufleitung (L3), **dadurch gekennzeichnet, dass**
. die Ablaufleitung (L3) sich in einem ersten Mehrwegeventil (6) mit der Zulaufleitung (L2) fluidgängig kreuzt und
. mit einer in der Ablaufleitung (L3), oberstromig des ersten Mehrwegeventils (6), angeordneten Abförderpumpe (5) und,
. dass die Zulaufleitung (L2) oberstromig des ersten Mehrwegeventils (6) über einen zweiten Wärmeaustauscher (3) geführt ist,
. dass sich die Umlaufleitung (L1) in einem zweiten Mehrwegeventil (7) mit der Zulaufleitung (L2) fluidgängig kreuzt, und
. dass das zweite Mehrwegeventil (7), bezogen auf die Zulaufleitung (L2), oberstromig des zweiten Wärmeaustauschers (3) angeordnet ist.

## Claims

1. A method for the discontinuous provision of temperature-controlled water (WW) for use in a process for producing and/or treating a food item in which freshwater (FW) is recuperatively heated by means of at least one first heat transfer medium (M1) to a desired hot water temperature (T5) and is kept ready as hot water (HW) at this hot water temperature (T5) until discharge, and wherein the hot water (HW) and
**characterized in that**
• additional freshwater (FW) are mixed with the temperature-controlled water (WW) at a desired mixing temperature (T4), and
• at least the freshwater (FW) to be supplied for mixing with the hot water (HW) is recuperatively preheated by means of a second heat transfer medium (M2) to become preheated water (VW),
• in the time intervals in which no temperature-controlled water (WW) is mixed or fresh water (FW) is heated to become hot water (HW), the hot water (HW) that is being kept ready is supplied to the flow, at least in the sections supplied with the preheated water (VW) up to the mixing point for the hot water (HW) and the preheated water (VW).

2. The method according to claim 1, **characterized in that**
**characterized in that**
the freshwater (FW) to be supplied for preparing the hot water (HW) is recuperatively preheated by means of the second heat transfer medium (M2) to become preheated water (VW).

3. The method according to claim 1 or 2,
**characterized in that**
the flow in all of the sections supplied with the preheated water (VW) is supplied with the hot water (HW) being kept ready.

4. The method according to one of the preceding claims,
**characterized in that**
at least the second heat transfer medium (M2) originates from a heat recovery process.

5. An arrangement for performing the method according to one of the preceding claims:
• with a circulating line (L1) running through a hot water tank (1) and a first heat exchanger (2) in which a circulating pump (4) is arranged between the hot water tank (1) and first heat exchanger (2),
• with a feed line (L2) directly or indirectly in the hot water tank (1),
• with a drain line (L3) discharging directly or indirectly from the hot water tank (1),
**characterized in that**
• the drain line (L3) fluidically intersects with the feed line (L2) in a first multi-way valve (6), and
• with a discharge pump (5) arranged in a drain line (L3) upstream from the first multi-way valve (6), and
• the feedline (L2) upstream from the first multi-way valve (6) runs through a first heat exchanger (3),
• the circulating line (L1) fluidically intersects with the feed line (L2) in a second multi-way valve (7), and
• with reference to the feedline (L2), the second multiway valve (7) is arranged upstream from the second heat exchanger (3).

## Revendications

1. Procédé destiné à préparer de manière discontinue de l'eau tempérée (WW) pour être utilisée dans un processus de fabrication et/ou de traitement d'un aliment, dans lequel de l'eau fraîche (FW) est chauffée par récupération au moyen d'au moins un premier agent caloporteur (M1) à une température d'eau chaude (T5) souhaitée et est tenue à disposition en tant qu'eau chaude (HW) à cette température d'eau chaude (T5) jusqu'à sa distribution, et dans lequel l'eau chaude (HW) et
**caractérisé en ce que**
• de l'eau fraîche (FW) supplémentaire sont mélangées à l'eau tempérée (WW) à une température de mélange (T4) souhaitée, et
• **en ce qu'**au moins l'eau fraîche (FW) devant être acheminée au mélange avec l'eau chaude (HW) est préchauffée par récupération au moyen d'un deuxième agent caloporteur (M2) pour donner de l'eau préchauffée (VW),
• et **en ce que**, dans les périodes de temps dans lesquelles aucune eau tempérée (WW) n'est mélangée ou aucune eau fraîche (FW) n'est chauffée pour donner de l'eau chaude (HW), au moins les zones alimentées en eau préchauffée (VW) jusqu'au point de mélange pour l'eau chaude (HW) et l'eau préchauffée (VW) sont alimentées au moyen de l'eau chaude (HW) tenue à disposition dans le débit.

2. Procédé selon la revendication 1,
**caractérisé en ce que**
l'eau fraîche (FW) devant être acheminée pour la préparation de l'eau chaude (HW) est préchauffée en eau préchauffée (VW) par récupération au moyen du deuxième agent caloporteur (M2) pour donner de l'eau préchauffée (VW).

3. Procédé selon la revendication 1 ou 2,
**caractérisé en ce que**
toutes les zones alimentées en eau préchauffée (VW) sont alimentées au moyen de l'eau chaude (HW) tenue à disposition dans le débit.

4. Procédé selon l'une des revendications précédentes,
**caractérisé en ce**
**qu'**au moins le deuxième agent caloporteur (M2) provient d'un processus de récupération de chaleur.

5. Dispositif destiné à la réalisation du procédé selon l'une des revendications précédentes,
• avec une conduite de circulation (L1), guidée via une cuve d'eau chaude (1) et un premier échangeur de chaleur (2), dans laquelle est disposée une pompe de recirculation (4) entre la cuve d'eau chaude (1) et le premier échangeur de chaleur (2),
• avec une conduite d'arrivée (L2) débouchant directement ou indirectement dans la cuve d'eau chaude (1),
• avec une conduite de départ (L3) débouchant directement ou indirectement de la cuve d'eau chaude (1),
**caractérisé en ce que**
• la conduite de départ (L3) croise de façon fluidique la conduite d'arrivée (L2) dans une première valve multivoie (6), et
• avec une pompe d'évacuation (5) disposée dans la conduite de départ (L3) en amont de la première valve multivoie (6),
• **en ce que** la conduite d'arrivée (L2) est guidée en amont de la première valve multivoie (6) via un deuxième échangeur de chaleur (3),
• **en ce que** la conduite de circulation (L1) croise de façon fluidique la conduite d'arrivée (L2) dans une deuxième valve multivoie (7), et
• **en ce que** la deuxième valve multivoie (7) est, par rapport à la conduite d'arrivée (L2), disposée en amont du deuxième échangeur de chaleur (3).
